Europäisches Patentamt

European Patent Office

Office européen des brevets

(11) Publication number: **0 306 562**
**A1**

## (12) EUROPEAN PATENT APPLICATION

(21) Application number: 87201705.8

(22) Date of filing: 09.09.87

(51) Int. Cl.⁴: **B60Q 1/44**

(43) Date of publication of application:
**15.03.89 Bulletin 89/11**

(84) Designated Contracting States:
**CH DE ES FR GB LI SE**

(71) Applicant: **Giovalli, Giancarlo**
**Via Guala 8/2**
**I-10135 TORINO(IT)**

Applicant: **Manera, Piero Dr.Arch.**
**Via Saluzzo 44**
**I-10125 TORINO(IT)**

(72) Inventor: **Giovalli, Giancarlo**
**Via Guala 8/2**
**I-10135 TORINO(IT)**
Inventor: **Manera, Piero Dr.Arch.**
**Via Saluzzo 44**
**I-10125 TORINO(IT)**

(74) Representative: **Patrito, Pier Franco, Dr. Ing.**
**Cabinet PATRITO BREVETTI Via Don Minzoni**
**14**
**I-10121 Torino(IT)**

(54) Deceleration warning device for vehicles.

(57) Appareil avertisseur de décélération, destiné à être installé sur un véhicule pour avertir en temps utile les véhicules qui suivent, en cas de décélération brusque, comprenant une masse (3) qui peut se déplacer le long d'une trajectoire rectiligne ou courbe substantiellement selon la direction de marche du véhicule, un moyen, tel qu'un ressort (4) éventuellement réglable et/ou la gravité, pour appliquer à la masse (3) une force orientée dans le sens opposé au sens de marche, un interrupteur électrique (5-6) connecté à la masse (3) de manière à être fermé lorsque cette dernière se déplace en avant en surmontant l'action de la force qui lui est appliquée, un circuit temporisateur (CI) éventuellement réglable connecté à l'interrupteur (5-6) pour engendrer un signal d'une durée preétabilie à partir de la fermeture de l'interrupteur, et un moyen (RL) pour la connexion de l'appareil au circuit (IP) de signalisation de secours de véhicule arrêté, disposé pour activer ledit circuit de signalisation pendant la période dans laquelle persiste le signal engendré par le temporisateur.

FIG. 2

## APPAREIL AVERTISSEUR DE DECELERATION, POUR VEHICULES

La présente invention a pour objet un appareil avertisseur de décélération, destiné à être installé sur un véhicule pour avertir en temps utile, dans le cas d'une décélération brusque, les véhicules qui suivent.

Il est important que les véhicules qui procèdent l'un après l'autre sur une route soient avertis en temps utile dans le cas d'une décélération brusque du véhicule qui précède, de sorte à pouvoir prendre les mesures nécessaires pour prévenir un tamponnement éventuel, ou tout au moins pour en limiter les conséquences. Au présent on tache d'obtenir cet effet au moyen de feux de signalisation qui sont activés par l'actionnement des freins du véhicule. Cependant, ce type di signalisation, qui est satisfaisant dans plusieurs conditions normales, dans certains cas perd son efficacité. Par exemple, la décélération brusque et même l'arrêt soudain d'un véhicule peuvent être déterminés non par l'actionnement des freins, mais par le choque contre un obstacle, ou bien par un coincement d'organes mécaniques, et dans ces cas aucune signalisation n'est emise pour avertir les véhicules qui suivent. En outre, la signalisation de freinage en cours se présente d'une façon indifférenciée, soit dans le cas d'un freinage très léger, ou même dans le cas d'une légère pression exercée sur la pedale du frein afin de se tenir prêt à un freinage éventuel, soit dans le cas d'un freinage violent, de sorte que le conducteur du véhicule qui suit peut mal interpréter la signalisation en termes d'intensité de la décélération en cours du véhicule qui précède. Ces conditions peuvent devenir particulièrement critiques en cas de visibilité mauvaise, par exemple en cas de brouillard, quand les feux du véhicule qui précède peuvent constituer pratiquement tout ce qu'on voit du véhicule lui-même à une distance de sécurité, tandis que rien ne peut être vu de ce qui se trouve devant le véhicule même.

En considération de ce qui précède, le but de la présente invention est de réaliser un appareil avertisseur de décélération qui soit capable de fournir une signalisation efficace qui puisse être immédiatement perçue et qui soit activée par la décélération subie par le véhicule, lors que cette dernière dépasse une certaine valeur prédéterminée, indépendamment de la cause qui a déterminé la décélération elle-même.

Ce but est atteint, selon l'invention, par le fait que l'appareil avertisseur de décélération comprend une masse déplaçable substantiellement le long de la direction de marche du véhicule, un moyen pour appliquer à ladite masse une force orientée dans le sens opposé au sens de marche, un interrupteur électrique relié à ladite masse de sorte à être fermé lorsque ladite masse se déplace en avant en surmontant l'action de ladite force, un circuit temporisateur connecté audit interrupteur pour engendrer un signal ayant une durée préfixée après la fermeture dudit interrupteur, et un moyen pour la connexion de l'appareil à un circuit de signalisation de secours de véhicule arrêté, disposé pour activer ledit circuit de signalisation pendant la période dans laquelle persiste ledit signal engendreé par le temporisateur.

Grâce à ces caractéristiques, ledit interrupteur électrique est fermé si le véhicule subit une décélération qui dépasse une valeur limite préfixée, laquelle dépend des dimensions de ladite masse et de la force appliquée à cette dernière, indépendamment de la cause de la décélération; lorsque ledit interrupteur électrique est fermé, le temporisateur commence à engendrer un signal qui est envoyé au circuit de signalisation de secours de véhicule arrêté, afin de l'activer, et cette signalisation est ensuite maintenue pour un temps qui dépend du réglage du temporisateur et qui peut être choisi d'une valeur suffisante pour assurer la perception de la signalisation par les véhicules qui suivent. Le circuit de signalisation de secours de véhicule arrêté réalise, habituellement, l'allumage clignotant simultané des avertisseurs de changement de direction situés sur les deux côtés du véhicule, cette signa lisation étant très voyante et sûrement perceptible. Néanmoins, l'appareil peut trouver une application analogue aussi dans les cas où la signalisation de secours de véhicule arrêté est réalisée d'une façon différente de celle habituelle mentionnée.

La coordination d'un interrupteur accélérométrique, constitué par la masse mobile, par le moyen qui applique una force à cette masse, et par l'interrupteur électrique connecté à ladite masse, avec un temporisateur, fait en sorte que la signalisation soit émise pour un temps suffisant à sa perception sure, même si l'événement qui a déterminé la décélération est instantané, comme l'arrêt brusque contre un obstacle fixe. Même dans les cas où la situation n'est pas telle à permettre d'éviter le tamponnement par le premier véhicule qui suit, ce dernier, s'il est pourvu à son tour de l'appareil selon l'invention, engendrera un signal de décéleration par suite du freinage effectué par son conducteur ce qui, en général, permettra au véhicule ultérieurement suivant d'éviter un deuxième tamponnement, en limitant ainsi les conséquences du premier.

Ces caractéristiques et d'autres, et les avantages de l'objet de l'invention, ressortiront plus clairement de la suivante description de quelques formes de réalisation, représentées schématiquement à titre d'exemples non limitatifs dans le dessin annexé, dans lequel:

Fig. 1 montre un schéma électrique de l'appareil et de sa connexion au circuit électrique du véhicule;

Fig. 2 montre une première forme de réalisation possible de l'appareil;

Figs. 3 et 4 montrent deux autres formes de réalisation de l'interrupteur accélérométrique faisant partie de l'appareil.

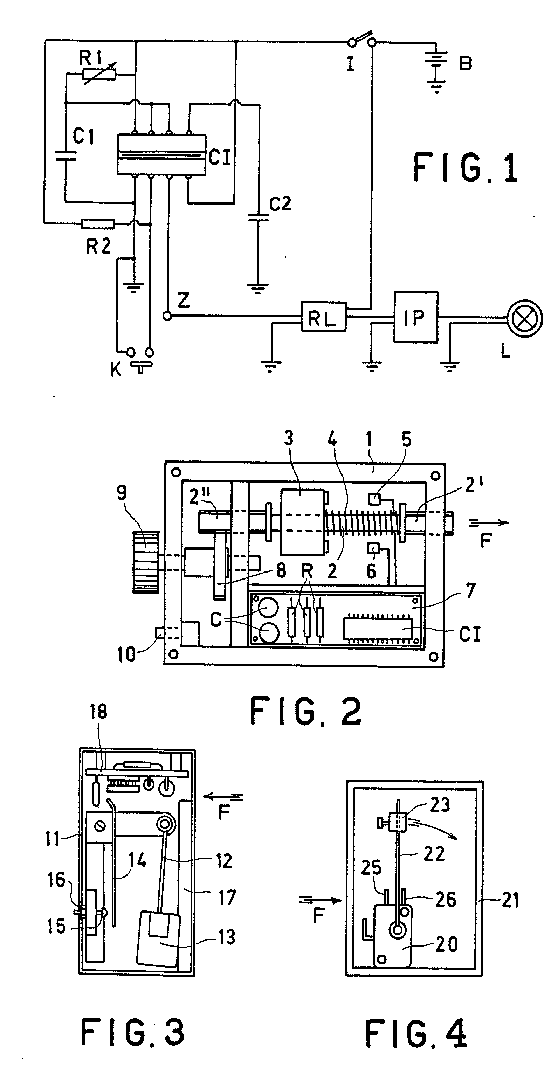

Dans le schéma de la figure 1, la référence I indique un interrupteur pour l'activation de l'appareil au moyen d'une alimentation électrique venant de la batterie B du véhicule. K indique l'interrupteur électrique associé à la masse mobile et faisant partie de l'interrupteur accélérométrique. CI indique un circuit intégré, ayant fonction de temporisateur, dont les paramètres sont prédéterminés, éventuellement d'une façon réglable, par les résistances R1 et R2 et par les condensateurs C1 et C2. Z indique le point où est présent un signal qui persiste pour un temps prédéterminé après la fermeture de l'interrupteur K. RL indique un relais destiné à relier la sortie Z au circuit de signalisation de secours de véhicule arrêté, ledit circuit pouvant par exemple comprende un interrupteur périodique IP et une série de lampes électriques L (dont une seule est représentée), appartenant aux avertisseurs de changement de direction situés des deux côtés du véhicule.

En cas d'un événement quelconque donnant lieu à une décélération du véhicule qui dépasse une limite prédéterminée, la fermeture de l'interrupteur K détermine l'activation du temporisateur CI et la présence d'un signal, qui persiste pour un certain temps, au point Z, et de ce fait l'excitation du relais RL et l'activation conséquente de la signalisation de secours de véhicule arrêté. La durée de la signalisation dépende des paramètres du temporisateur et elle peut être préétablie, ou bien elle peut être aussi laissée (au moins dans certaines limites) au choix de l'installateur, en rendant variable quelque paramètre du temporisateur, par exemple la résistance R1. La signalisation se commence en tout cas au moment de la fermeture de l'interrupteur K, tandis que le circuit peut être disposé de telle façon que le commencement du temps préfixé pour la persistence de la signalisation peut être établi par la fermeture même de l'interrupteur K ou bien par son ouverture successive. Le relais RL peut être omis dans les cas dans lesquels le circuit intégré, par sa nature même, est déjà capable de controler directement le circuit de signalisation IP.

L'appareil peut, per exemple, être construit substantiellement selon la figure 2. La boîte 1, contenant l'appareil ou une partie de ce dernier, est destinée à être installée sur un véhicule de sorte que son axe longitudinal (indiqueé dans la figure 1 par la flèche F) corresponde au moins approximativement, et dans le sens voulu, à l'axe longitudinal du véhicule. Dans la boîte 1 est installé un pivot 2 sur lequel est montée d'une façon glissante une masse 3 qui est sollicitée à se déplacer en arrière (par rapport à la direction de marche normale du véhicule) par un ressort 4. Deux bornes de contact 5 et 6 son disposées dans la boîte 1 de manière à povoir être connectées l'une à l'autre par un élément de la masse 3, si cette dernière est déplacée en avant, en comprimant le ressort 4. Les bornes de contact 5, 6, avec la partie de la masse 3 qui est destinée à les connecter, forment l'interrupteur K déjà mentionné. Une plaquette 7 installée dans la boîte 1 supporte les composants du circuit, particulièrement le circuit intégré CI, les résistances R et les condensateurs C.

Comme on peut bien le comprendre, au moment où se vérifie une décélération du véhicule, la masse 3 tend à se déplacer en avant, mais la force exercée par le ressort 4 lui fait obstacle. Cependant, si la décélération est suffisamment intense, la masse 3 arrive a connecter les bornes de contact 5, 6 en donnant ainsi lieu au commencement du fonctionnement de l'appareil, déjà décrit à propos de la figure 1.

La valeur limite de la décélération, au dépassement de laquelle a lieu la signalisation, dépend de l'importance de la masse 3 et de la force exercée par le ressort 4 dans la position dans laquelle a lieu la fermeture des contacts. Cette force, le cas échéant, peut être rendue réglable afin de permettre à l'usager un réglage de la sensibilité de l'interrupteur accélérométrique. Dans ce but, les extrémités $2'$, $2''$ du pivot 2 sont filetées et le pivot même peut être tourné (afin de le visser par rapport à la boîte 1 et, par conséquent, de le déplacer axialement) par l'action d'un moyen de transmission 8 relié à un bouton 9. Au moyen de ce dernier on peut donc modifier la configuration de l'interrupteur accélérométrique en imposant à la masse 3 une compression différente du ressort 4 pour arriver à connecter les bornes de contact 5, 6, de sorte que le seuil d'intervention de l'appareil est modifié d'une façon correspondante. Un interrupteur 10 permet d'activer ou de débrancher l'appareil, et il correspond à l'interrupteur I déjà décrit à propos de la figure 1.

L'appareil représenté dans la figure 2 peut, par exemple, être ins tallé sur le tableau de bord du véhicule, soit à partir de l'origine ou bien comme accessoire ajouté, et il peut aussi incorporer des autres dispositifs, tel qu'un indicateur du seuil de sensibilité fixé, ou des lampes témoins indiquant le

fonctionnement, ainsi que d'autres appareils éventuels, comme par exemple une montre, un dateur, et ainsi de suite. Si, par contre, l'appareil n'est pas pourvu de moyens de mise à point qui peuvent être actionnés par l'usager, ni de moyens d'indication du fonctionnement, il peut être installé dans n'importe quelle partie du véhicule.

Au lieu d'une masse se déplaçant le long d'une ligne droite, l'interrupteur accélérométrique peut comprendre une masse supportée par un bras pivoté, se déplaçant le long d'un arc orienté approximativement dans la direction longitudinale du véhicule. Selon la figure 3, la masse 13 est supportée par un bras 12 pivoté dans sa partie supérieure sur une boîte 11 et formant, avec la masse 13, un pendule. La masse 13, normalement, prend appui d'un côté contre un élément amortissant, tel qu'une feuille de matière plastique cellulaire 17. De l'autre côté de la masse 13, à une certaine distance de cette dernière, est disposée une lame élastique 14, à une certaine distance de laquelle est située une borne de contact 15, dont la position peut être éventuellement réglée au moyen d'un écrou 16. La partie supérieure de la boîte 11 peut contenir une plaque 18 supportant les composants électroniques du circuit.

Dans ce cas, la force contre laquelle doit se déplacer la masse 13 est fournie principalement par la gravité, à laquelle cependant s'ajoute la réaction élastique de la lame 14 lorsqu'une élongation de la masse pendulaire 13 porte cette dernière à contact avec la lame. Lorsque ces deux forces ont été surmontées, la lame 14 arrive jusqu'à la borne de contact 15 et elle active l'appareil de signalisation.

Il faut noter que la disposition illustrée pourrait être renversée, en montant la masse comme un pendule renversé ou antipendule, et en confiant l'engendrement de la force qui contraste les déplacements de la masse à la gravité ou/et à un moyen élastique.

Dans la forme de réalisation illustrée schématiquement dans la figure 4, la masse 23 est montée, éventuellement en une position réglable, sur un bras 22 qui s'étend à partir de l'élément mobile d'un microinterrupteur 20 installé dans une boîte 21. Dans ce cas, le même ressort de rappel installé dans l'intérieur du microinterrupteur est utilisé pour contraster l'avancement de la masse 23, et les contacts actionnés sont ceux qui sont situés à l'intérieur du microinterrupteur et qui sont reliés aux connecteurs 25 et 26.

Puisque l'appareil utilise une masse qui se déplace le long d'une direction liée au véhicule, laquelle est substantiellement horizontale seulement si le véhicule se trouve lui-même en position horizontale, l'appareil modifie sa propre sensibilité en fonction de l'inclinaison du véhicule. Cependant, cela conduit à une plus grande sensibilité pendant les descentes, quand les possibilités de tamponnement en cas de décélération sont plus grandes, et de ce fait cette sensibilité de l'appareil à l'inclinaison peut être considérée non comme un inconvénient, mais plutôt comme un avantage.

Il faut enfin mentionner la possibilité d'employer comme interrupteur accélérométrique un interrupteur à boule de mercure, proportionné opportunément et disposé afin que l'avancement avec soulèvement contemporaire du mercure contenu provoque la connexion de deux bornes de contact lorsque la décélération appliquée dépasse la limite préfixée.

Comme on l'a déjà dit, l'appareil selon l'invention peut être connecté aux signaleurs de secours de véhicule arrêté, existants et diffusés, qui agissent moyennant l'activation simultanée des avertisseurs de changement de direction situés des deux côtés du véhicule. Cependant, l'appareil peut également contrôler le fonctionement de n'importe quel autre genre de signaleur de secours du véhicule, connu ou qui sera utilisé à l'avenir. Entendu comme un accessoire, l'appareil peut comprendre en soi aussi le circuit d'un signaleur de secours de véhicule arrêté, afin de pourvoir d'un tel circuit des véhicules qui en sont encore dépourvus.

## Claims

1 . Appareil avertisseur de décélération, destiné à être installé sur un véhicule pour avertir en temps utile les véhicules qui suivent en cas de décélération brusque, caractérisé en ce qu'il comprend une masse (3,13,23) qui peut se déplacer substantiellement dans la direction de marche du véhicule, un moyen (14,12,22) pour appliquer à ladite masse (3,13,23) une force orientée dans le sens opposé au sens de marche, un interrupteur électrique (5-6,14-15,20) relié à ladite masse de sorte à être fermé losque ladite masse se déplace en avant en surmontant l'action de ladite force, un circuit temporisateur (CI) connecté audit interrupteur pour engendrer après la fermeture dudit interrupteur un signal ayant une durée preétablie, et un moyen (RL) pour la connexion de l'appareil à un circuit (IP) de signalisation de secours de véhicule arrêté, disposé pour activer ledit circuit de signalisation pendant la période dans laquelle persiste ledit signal engendré par le temporisateur.

2 . Appareil avertisseur de décélération selon la revendication 1, caractérisé en ce que ladite masse (3) est guidée afin de se déplacer selon une trajectoire substantiellement rectiligne, au moins approximativement parallèle de la direction longitudinale du véhicule.

3 . Appareil avertisseur de décélération selon la revendication 1, caractérisé en ce que ladite masse (13,23) est pivotée pour se déplacer selon une trajectoire courbe au moins approximativement tangente à la direction longitudinale du véhicule.

4 . Appareil avertisseur de décélération selon la revendication 3, caractérisé en ce que ladite masse (13,23) constitue une masse pendulaire (13) ou antipendulaire (23).

5 . Appareil avertisseur de décélération selon la revendication 1, caractérisé en ce que ledit moyen (4) pour appliquer une force à la masse est formé en tout ou en partie par un ressort.

6 . Appareil avertisseur de décélération selon la revendication 1, caractérisé en ce que ledit moyen (12) pour appliquer une force à la masse est constitué en tout ou en partie par la gravité.

7. Appareil avertisseur de décélération selon la revendication 1, caractérisé en ce qu'il comprend des moyens (2′,2″,8,9) pour régler l'intensité de la force appliquée à ladite masse (4).

8 . Appareil avertisseur de décélération selon la revendication 1, caractérisé en ce qu'il comprend des moyens (R1) pour régler la durée du signal engendré par ledit temporisateur.

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 708 782  (MORI)<br>* Figures 1,2 *<br>--- | 1 | B 60 Q   1/44 |
| Y | US-A-4 470 036  (DOERR)<br>* Figure 3 * | 1 | |
| A | | 2,5 | |
| | --- | | |
| A | DE-A-3 519 828  (KOCH-KEMPER)<br>* Résumé; figures *<br>--- | 1 | |
| A | EP-A-0 031 983  (RAMEIL)<br>* Figures 1,2,7,8,9 *<br>----- | 3,4,6,7 | |

DOMAINES TECHNIQUES
RECHERCHES (Int. Cl.4)

B 60 Q

Le présent rapport a été établi pour toutes les revendications

| Lieu de la recherche | Date d'achèvement de la recherche | Examinateur |
|---|---|---|
| LA HAYE | 22-04-1988 | ONILLON C.G.A. |

EPO FORM 1503 03.82 (P0402)